# EUROPEAN PATENT SPECIFICATION

(11) **EP 3 168 541 B1**
(45) Date of publication and mention of the grant of the patent: **27.02.2019**
(21) Application number: 16198613.8
(22) Date of filing: 14.11.2016
(51) Int. Cl.: F24D 19/10, G05D 7/06

(54) **HEATING LOAD BALANCING**
HEIZLASTAUSGLEICH
ÉQUILIBRAGE DE CHARGE DE CHAUFFAGE

(30) Priority: 16.11.2015 DK 201500724
(43) Date of publication of application: 17.05.2017
(73) Proprietor: Danfoss A/S, 6430 Nordborg (DK)
(72) Inventor: THYBO, Claus, 8230 Aabyhøj (DK); GUDMUNDSSON, Oddgeir, 6400 Sønderborg (DK); BENONYSSON, Atli, 6400 Sønderborg (DK)

(56) References cited:
- EP-A2- 1 357 336
- DE-A1- 10 317 183
- DE-A1- 19 859 364
- US-A1- 2015 316 935

## Description

### BACKGROUND

Heating systems usually includes an energy supply (e.g. power plant) for feeding energy to one or more consumers. The supplied energy may be conveyed through a heat transferring supply fluid at some supply flow rate and supply temperature. The systems can operate on a planned basis e.g. by a forecast in the expected energy demand, this is referred to as a PUSH principle where the flow usually is essentially constant, or it can operate more in relation to an actual demand, this is referred to as a PULL principle where the flow may be adjusted according to a consumer demand.

In the PULL principle the power supply is expected to be able to deliver sufficient energy for all the consumer demands and each consumer usually has regulation means to change the actual energy delivered to the consumer, the billing thus typically being related to the actual individual customer usage.

In the PUSH principle the supplied energy is given according to e.g. a forecast, or simply the available recourses, and thus the consumers cannot be guaranteed to be delivered the desired energy, the heat is pushed to the buildings independent of the individual building requirements. Billing then typically is fixed and based e.g. on the number of square meters to be heated and the consumers may have limited control over the supplied heat and may react to overheating of living spaces by opening windows etc., thus leading to unnecessary loss of heating energy from the system.

If the delivered energy is insufficient for all consumers to obtain a desired condition like indoor temperature the consumers tend to extract as much energy as possible from the system thus favouring those closest to the energy supply. For systems where the consumers have individual regulation means, such as valves, for setting the flow rate and thereby defining energy being extracted from the supply fluid, it frequently is observed they run fully open at any time to extract a maximum amount of energy. When the total supply fluid does not deliver a sufficient amount of energy for all consumer demands, the risk is that some receives less energy than expected.

This is unlike e.g. PULL systems where the supplied energy is regulated in response to the actual demand of the individual customers.

A method of balancing a group of consumers in a fluid transport system is disclosed in the US patent application publication no. 2015/0316935. In the disclosed system, each consumer is provided with a motorized control valve for regulating the flow through the consumer, characteristic data for the consumers is stored which determines a valve position of the relevant control valve for target flows through one of the consumers in each case. A current total flow through the group of consumers is determined by means of a common flow sensor and a balance factor is defined on the basis of the current total flow and a sum of the desired target flows through the consumers. The consumers are dynamically balanced by setting the valve settings for the corresponding control valves on the basis of the characteristic data and the balance factor.

The present idea is to introduce a system and method of regulating PUSH systems to ensure a fair distribution of energy and to lower the energy waste.

### SUMMARY OF THE INVENTION

The idea of the disclosed system is to solve the problems as given in the claims. This includes defining a maximum flow draw off for each of the consumers in relations to the actually available flow of energy in the system.

For district heating systems the supply heating fluid usually is transported in the heating network and to substations associated with the consumer where heat exchangers extract the needed energy and this energy extracted from the supply heating fluid is then transferred to the associated consumer's heating devices like radiators, floor heating installations, domestic water supplies etc. through local heating systems.

Control equipment, such as a control valve, is connected for each of the consumers, defining the flow supply heating fluid to be delivered to the associated consumer substation.

For cooling systems a cooling fluid is circulated in a circuit connected to e.g. a heat exchanger device to extract heat from a given place.

For both systems the fluid is a heat transferring fluid, either a heating fluid or cooling fluid.

In the following most of the embodiments of example are explained in relation to heating systems, but the method of control applies just as well to a cooling system.

By collecting signals from local components it is possible to estimate how much heat a certain substation associated with a consumer is delivering. This could for example be signals from heat meters, flow meters, pressure sensors, opening degree of the valves, and/or temperature sensors.

By feeding those signals from all substations to a control system, or management system, it is possible to estimate how much share of the flow or heat supply each substation receives.

In one embodiment the control system can be used to adjust the maximum opening positions of the control valves associated to the substations of the consumers (or more generally, to regulate the associated control equipment)to ensure that each substation cannot receive more flow than a pre-defined specification, this specification either depending on a maximum received volume flow or a maximum received energy.

The system in an embodiment is being operated under different modes of regulations, the basic being to balance a thermal flow system supplying heat transfer fluid at a supply flow rate and a supply temperature to a plural of consumers, where each consumer is associated with a connected control equipment (e.g. valves or pumps) configured to regulate the flow rate of the heat transferring fluid delivered to said consumer, the method being to regulate said control equipment such that the associated consumer receives a flow rate of heating fluid corresponding to a set fraction of the total supply flow rate.

To define the set fractions, then according to an embodiment each individual of said consumers is set to receive an individual flow rate depending on factors like the energy needed to obtain a set temperature, such as indoor temperature, where in one embodiment the set temperature is the same for all of said plural of consumers.

According to the invention one mode of control includes energy mode of regulation of the control equipment when the supply energy is surplus relative to a total energy demand, where the energy mode of regulation is to set each control equipment such that each consumer receives an individual maximum energy from the heat transfer fluid, which in one embodiment may be according to a pre-set individual energy fraction of the total energy supplied. By setting the maximum draw of off energy it is controlled how much unnecessary energy a consumer may waste, e.g. by opening the windows leaving still drawing off a maximum of energy, thus leading to a combined energy saving.

According to the invention one mode of control includes volume mode of regulation of the control equipment when there is deficiency of supply energy in relation to a total energy demand, the volume mode of regulation being to set each equipment valve such that each consumer receives an individual maximum flow rate of heat transfer fluid according to a pre-set individual flow volume rate fraction of the total supply volume fluid. Hereby is ensured that the total supply flow is split fairly between the consumers, at least to the degree the fractions is fairly set.

In an embodiment one mode of control includes reacting to local oversupplies according to the demanded energy from consumers. In the situation where a consumer for a time are not using all of the supplied energy, then the control equipment associated with that consumer will be set at a lower flow rate than the one otherwise set according to a pre-set individual energy or flow volume rate fraction for the consumer. This control mode may include the step of registering when there is a higher flow rate and / or energy supply to one of said consumers relative to what is needed to obtain said set temperature and then regulate the associated valve to deliver a lower heating flow rate fraction. Once the consumer demand increases again the flow rate then is increased again, which may be done until it reaches the maximum set flow rate in relation to the pre-set individual energy or flow volume rate fraction set for the consumer. In this way this local surplus of energy is directed to the consumers who may still get less energy than desired,

In one embodiment a controller detects which mode to use for regulation for each of the consumers, both seen in relation to the global total demand compared to the total supply, and in relation to the actual present individual consumer demand in relation to the one granted by a set fraction, and then regulate each individual control equipment associated with the individual consumer accordingly.

Therefore a scheme in an embodiment is to set all control equipment's according to energy mode regulation when the total supplied energy are sufficient to cover the total demand, to change to volume mode when it is deficient to cover the total demand, but to regulate the control equipment of individual consumers according to a different mode when e.g. the consumer are in surplus of energy in relation to the demand, this directing the surplus energy to the other consumers.

### FIGURES

- Fig. 1: A flow network having a heat supply for distributing a heat transferring fluid to a plural of consumers
- Fig. 2: A flow network where the distribution to the plural of consumers is done under a fair split principle.
- Fig. 3: A heat connection to a sub-station heat exchanger.

### DETAILED DESCRIPTION OF THE INVENTION

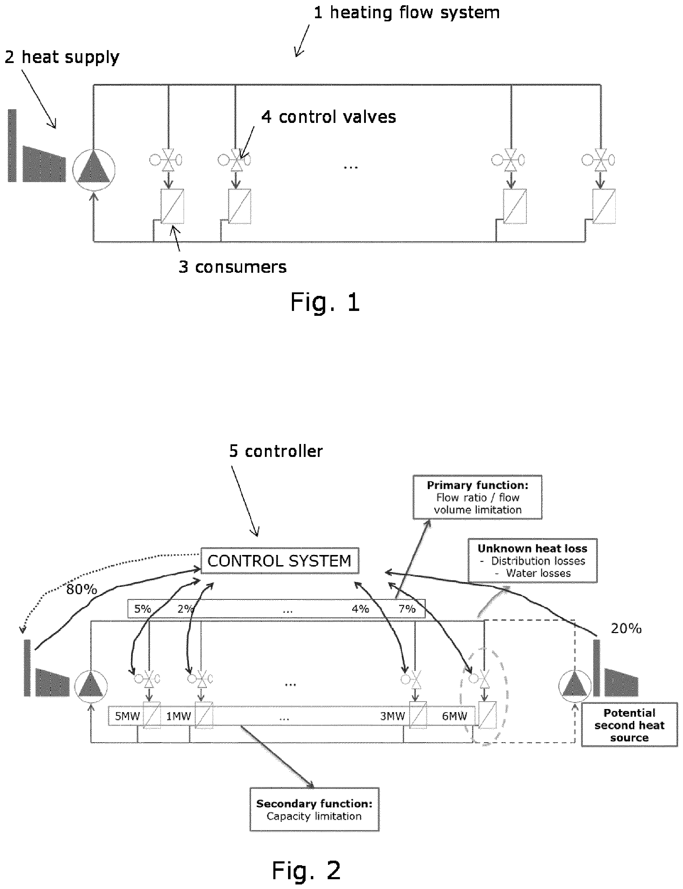

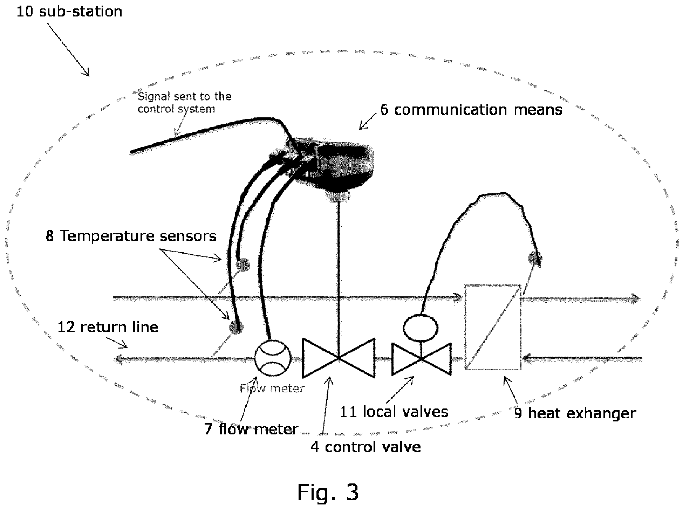

Fig. 1 illustrates a heat transfer flow system (1) having a heat supply (2) source, such as a plant providing a heat transferring fluid. The illustrated embodiment shows a heating system where the heat transferring fluid thus is a heating fluid. The heat transferring fluid flows at a supply flow rate and a supply temperature to a plural of consumers (3), where each usually is associated with a sub-station (10) comprising a heat exchanger to extract energy from the heating fluid to the consumer (3) (see also fig. 3). In the illustrated embodiment the consumers (3) are positioned in parallel and each associated with a connected control equipment (4) to provide each individual sub-station (10), and thus consumer (3), with an individual consumer flow rate of heating fluid.

The consumers (3) may be individual consumers like domestic housings or they may themselves comprise one or more sub-heating flow systems, the individual consumer flow rate thus being considered as the supply flow rate for the next sub-heating flow system comprising sub-consumers, and where each of these consumers then again could comprise further sub heating systems with sub-consumers etc. The below disclosed embodiments will apply to any level of flow systems with consumers, sub-flow systems with sub-consumers etc.

A consumer could be a plural of housings or a district comprising a plural of housings, where each of the housings themselves then could be sub-heating systems having sub consumers being the individual apartments etc.

The source of heat supply (2) provides the supplied energy to the consumers through the heat transferring fluid, where the supplied energy depends on the supply flow rate and supply temperature.

The common situation for supply plants in PUSH systems is that the supply flow rate roughly is constant at a given setpoint, where this setpoint may be changed e.g. according to seasons and expected energy consumption of the consumers (3), and may be centrally adjusted e.g. to the outdoor air temperature. The supply temperature however may often fluctuate quite significantly in dependence on a number of factors such as the ambient conditions etc. It could however also be that either or both fluctuates or that both are basically constant.

In some systems there is only one source of heat supply (2), but any number could be connected to the heating or cooling flow system (1).,

Two basic conditions may exist, the first being that the supplied energy are in surplus (or equal to) the next being that the supplied energy are deficit in relation to the combined total consumer (3) demand.

This also applies locally in relation to each individual consumer (3), that the individual supplied energy are in surplus (or equal to) the next being that the supplied energy are deficit in relation to the local consumer (3) demand, considering also the heat losses normally occurring in the network.

Fig. 2 illustrates the basic idea of fair energy and / or volume flow splitting. Each control equipment (4) is regulated by a controller (5), where the communication could be in two-ways such as to send control signals as well as to receive sensor data e.g. on the state of operation, flow rate, pressure and temperature of the individual heating flow, local ambient conditions etc. In an embodiment as seen in Fig. 3 the communication goes through communication means (6) connected to the control equipment (4). The system therefore comprises all the needed devices for such regulations etc. like actuator, sensors etc. as also to be described below.

The controller (5) in the fair splitting embodiment is set to provide each consumer (3) with a pre-defined fraction (or percentage) of either the total supply energy or the total supply volume flow rate, where the control equipment (4) by the controller will be set to regulate either to a set individual consumer flow volume fraction of the total supply flow rate, or energy fraction.

These individual consumer fractions may in embodiments be calculated and / or measured according to local consumer (3) needs to obtain a given indoor temperature, e.g. 18 degree Celsius to the individual domestic living spaces of the consumers (3). Further the building- designs, consumer feedback etc. may also be parameters of the calculation.

Fig. 2 illustrates an situation where the heat supply (2) is only capable of providing less than 100% (in the illustration 80%) of the total energy demanded (including heat losses in the network), then each control equipment (4) will be set by the controller (5) to deliver an individual flow rate of heating fluid corresponding to a pre-set consumer volume flow or energy fraction such as etc. 5%, 2% etc. as illustrated. In an embodiment the controller (5) sets volume flow rate mode operation of the control equipment (4) when the supply energy is in surplus in relation to the total demand of all consumers (3) (including sub-consumers etc.). This is also referred to as volume mode, and in an embodiment the controller (5) sets volume mode regulation of the control equipment (4) when the supply energy or supply flow is in deficit in relation to the total demand of all consumers (3) (including sub-consumers etc.), or more generally when not all consumers gets the desired energy e.g..if the hydraulic capacity of network/pumps is exhausted.

In an alternative embodiment the fair split is related to the supply energy and the controller (5) sets the control equipment (4) to regulate such that each consumer receives a pre-set consumer energy fraction, given the actual supply flow rate and supply temperature, such as in the illustration respectively 5%, 2% etc. This is also in the following referred to as energy mode regulation. This is also referred to as energy mode, and in an embodiment the controller (5) sets energy mode operation of the control equipment (4) when the supply energy is in surplus in relation to the total demand of all consumers (3) (including sub-consumers etc.).

The controller (5) in one embodiment could be operators, such as local operators, making local manual adjustments to the control equipment (4) settings.

The controller (5) may in another embodiment be in wired or wireless communication to the control equipment (4) such as through the cloud.

Fig. 3 illustrate an embodiment of a sub-station (10) as connected to an consumer (3) where a number of local valves (11) are connected making local controls according to local control needs, such local valves (11) could exist at the primary side of the heat exchanger (9) (as illustrated) and / or the secondary side, and at least some of them in an embodiment may be electronically controlled e.g. by the controller (5). Further sensors like flow meter (7) and/or temperature sensors (8) may be connected. A heat exchanger (9) may be included to form the heat connection of the heating fluid from the source(s) of heat supply (2) to the local fluid communication circuits. The communication means (6) form the communication link from the local components like sensors like flow meter (7) and temperature sensors (8) to the controller (5).

Actuators may be connected to the control valves (4) for making the regulations where these may form part of the communication means (6).

By collecting signals from local components it is possible to estimate how much heat certain substation (10) is delivering, for example the signals from flow meter (7) (and / or pressure sensors, opening degree of the control valve or pump rotations (4)) and one or both of the temperature sensors (8) in the illustrated embodiment connected to the forward line and return line (12) respectively of the heating flow system (10) connection to the local sub-station (10).
By feeding those signals from all substations to a controller (5) it is possible to estimate how much share of the flow or heat supply each substation is receiving.
By adding indication on the supply from the source(s) of heat supply (2) the controller (5) can be used to adjust the maximum opening positions of the control equipment (4) to ensure that each sub-station (10) cannot receive more flow than specified

The next step is to ensure that each substation cannot draw off more flow than it is entitled too according to the pre-set specification such as to deliver an individual flow rate of heating fluid at a set individual consumer fractions of the total supply flow rate. This is the case in the volume flow mode of regulation.
In addition to this maximum flow limitation the flow meter (7) and temperature sensors (8) are used to limit the heat draw off to a maximum allowed capacity, thus the energy used by the associated consumer, this being a second possible regulation where the total supply energy delivered by the heat supply (2) is split to the individual consumers (3) at individual energy supplies defined by set individual consumer energy fractions. This can also be referred to as the energy mode of the regulation.

In case of undersupply situation, or in case of the hydraulic capacity of the network being exhausted the maximum draw off is limited by the volume mode regulation.

In case of oversupply situation the maximum draw off is limited by the energy mode regulation.

Another control aspect is the condition where an individual supplied energy of a consumer (3) or sub-consumer at any level are in surplus to the local consumer (3) demand to maintain a given set temperature. In an embodiment this situation will be observed due to data received by the controller (5) through sensors connected to the communication means (6) and communicating this to the controller (5). The controller (5) then reacts by reducing the individual consumer fraction for this consumer (3) (sub-consumer) until the situation changes, thus feeding the energy forward to the other consumers (3) that are in deficit.

Another control aspect is the condition where an individual supplied energy of a consumer (3) or sub-consumer at any level are in deficit to the local consumer (3) demand to maintain a given set temperature. In an embodiment this situation will be observed due to data received by the controller (5) through sensors connected to the communication means (6) and communicating this to the controller (5). The controller (5) then reacts by re-calculating the energy split between all the consumers until the situation changes, thus reducing the energy supplied to the other consumers (3).

In an embodiment feedback from the consumers (3) are send to the controller (5) where this information may be used to re-adjust the control such as be recalculating the set fractions of the total supply flow rate. The information may also be used as fault detection on the flow system (2) such as to detect of a leak has appeared.

In an embodiment a flow meter (7) connected e.g. to the return line (12) of the heating flow system (10) connection to the local sub-station (10) this can be used to introduce a billing system based on the actual energy spending of each of the individual consumers (7) and sub-consumers at any level.

In an alternative or additional embodiment the losses in the system is also a parameter of the regulation, this means both heat losses and/or flow losses.

Heat losses will appear throughout flow network such as in the pipes conveying the heat transfer fluid between users where these losses are used e.g. to increase the fraction of some of the later consumers in the network to compensate for the losses not related their actual usage.

Further the flows in the system may also be lost along the network such as due to the pumps connected to the system operating differently, or even due to pump failures or problem.

In the same manner in an embodiment the method is related to, or includes, a diagnostics feature, such as to observe and possible set off an alarm if a sudden or gradual change of heat losses or flow rates in the system appears, thus indicating some kind of failure.

## Claims

1. A method to balance a thermal flow system (1) with a flow network supplying a heat transferring fluid to a plural of consumers (3) at a supply flow rate and a supply temperature, and where a control equipment (4) is connected for each consumer (3) configured to regulate the flow rate of heat transferring fluid delivered to said consumer (3), the method being to regulate said control equipment (4) such that the associated consumer (3) receives a maximum flow rate draw off of heating fluid corresponding to a set fraction of the total supply flow rate,
**characterized in that**
- wherein the method further includes energy mode of regulation of a control (5) being to set each control equipment (4) such that each consumer receives an individual maximum energy from the heat transfer fluid according to a pre-set individual energy fraction of the total energy supply,
- wherein the method includes volume mode of regulation of the control equipment (4) when there is deficiency of supply energy in relation to a total energy demand, the volume mode of regulation being to set each control equipment such that each consumer (3) receives an individual maximum flow rate of heat transfer fluid according to a pre-set individual flow volume rate fraction of the total supply volume fluid, where in case of undersupply situation, or in case of the hydraulic capacity of the network being exhausted, the maximum flow rate draw off is limited by the volume mode regulation, and in case of oversupply situation the maximum flow rate draw off is limited by the energy mode regulation.

2. A method according to claim 1, wherein each individual of said consumers (3) is set to receive an individual flow rate depending on factors including the energy needed to obtain a set temperature.

3. A method according to claim 2, where the set temperature is the same for all of said plural of consumers (3).

4. A method according to claim 2 or 3, wherein each of said consumers (3) comprise a plural of heat exchanger devices (9) configured to heat a plural of spaces, and where said fraction of the supply flow rate is set to correspond to a demanded energy supply to obtain said set temperature in said spaces.

5. A method according to any of claims 1-4, wherein the method includes lowering the flow rate to an individual consumer (3) when said consumer (3) demands less energy than what is supplied to the consumer (3).

6. A method according to any of the claims 2-5, wherein the method comprises the step of registering when the total supply flow rate is not sufficient to obtain the set temperature for all of the plural of consumers, then to lower each of the set fractions by a percentage calculated for each of said consumers (3) to obtain a new lowered set temperature.

7. A method according to any of the preceding claims, wherein each of said plural of control equipment's (4) are regulated in response to a changing supply flow rate.

8. A method according to any of the preceding claims, wherein each of said plural of control equipment's (4) are regulated in response to a changing supply temperature.

9. A method according to any of the preceding claims, wherein each of said plural of control equipment's (4) are controlled in common by said controller (5).

10. A method according to any of the preceding claims, where the method includes compensating the users for heat losses and / or pressure changes along the thermal flow system (1).

11. A method according to any of the preceding claims, where the method includes diagnostics by estimating if the consumers (3) gets less flow or energy than according to the expectations, then an alarm is given that a failure exists on the flow system, either a pumping or a flow line problem.

12. A controller (5) configured to perform the method steps according to any of the previous claims.

## Patentansprüche

1. Verfahren zum Ausgleichen eines thermischen Durchflusssystems (1) mit einem Strömungsnetz, das mehreren Verbrauchern (3) ein Wärmeübertragungsfluid mit einer Versorgungsdurchflussrate und einer Versorgungstemperatur zuführt, und wobei eine Steuereinrichtung (4) angeschlossen ist, die konfiguriert ist, um für jeden Verbraucher (3) die Durchflussrate von Wärmeübertragungsfluid, das dem Verbraucher (3) zugeführt wird, zu regulieren, wobei das Verfahren darin besteht, die Steuereinrichtung (4) so zu steuern, dass der zugehörige Verbraucher (3) eine Entnahme bei einer maximalen Durchflussrate von Heizfluid erhält, die einem Sollanteil der gesamten Versorgungsdurchflussrate entspricht,
**dadurch gekennzeichnet, dass**
- wobei das Verfahren ferner einen Energiemodus zum Steuern einer Steuerung (5) umfasst, um jede Steuereinrichtung (4) so einzustellen, dass jeder Verbraucher eine individuelle maximale Energie von dem Wärmeübertragungsfluid gemäß einem voreingestellten individuellen Energieanteil der gesamten Energieversorgung erhält,
- wobei das Verfahren einen Volumenregulierungsmodus der Steuereinrichtung (4) umfasst, wenn im Verhältnis zu einem Gesamtenergiebedarf ein Energieversorgungsdefizit besteht, wobei der Volumenregulierungsmodus jede Steuereinrichtung so eingestellt wird, dass jeder Verbraucher (3) eine individuelle maximale Durchflussrate von Wärmeübertragungsfluid gemäß einem voreingestellten individuellen Anteil der Durchflussvolumenrate des gesamten Versorgungsfluidvolumens enthält, wobei im Fall einer Unterversorgung oder im Fall, dass die hydraulische Leistung des Netzwerks erschöpft ist, die maximale Durchflussratenentnahme durch den Volumenregulierungsmodus begrenzt wird, und im Fall einer Überversorgung die maximale Durchflussratenentnahme durch den Energieregulierungsmodus begrenzt wird.

2. Verfahren nach Anspruch 1, wobei festgelegt ist, dass jeder einzelne der Verbraucher (3) eine individuelle Durchflussrate empfängt, die von Faktoren abhängt, die die Energie beinhalten, die zum Erhalten einer Solltemperatur benötigt wird.

3. Verfahren nach Anspruch 2, wobei die Solltemperatur für alle der mehreren Verbraucher (3) gleich ist.

4. Verfahren nach Anspruch 2 oder 3, wobei jeder der Verbraucher (3) mehrere Wärmetauschervorrichtungen (9) umfasst, die konfiguriert sind, um mehrere Räume zu erwärmen, und wobei der Anteil der Versorgungsdurchflussrate so eingestellt ist, dass er einer erforderlichen Energiezufuhr zum Erhalten der Solltemperatur in den Räumen entspricht.

5. Verfahren nach einem der Ansprüche 1-4, wobei das Verfahren das Herabsetzen der Durchflussrate eines individuellen Verbrauchers (3) umfasst, wenn der Verbraucher (3) weniger Energie benötigt als dem Verbraucher (3) zugeführt wird.

6. Verfahren nach einem der Ansprüche 2-5, wobei das Verfahren den Schritt des Registrierens umfasst, wenn die gesamte Versorgungsdurchflussrate nicht ausreicht, um die Solltemperatur für alle der mehreren Verbraucher zu erhalten, wobei dann jeder der Sollanteile um einen Prozentsatz, der für jeden der Verbraucher (3) berechnet wird, abgesenkt wird, um eine neue abgesenkte Solltemperatur zu erhalten.

7. Verfahren nach einem der vorhergehenden Ansprüche, wobei jede der mehreren Steuereinrichtungen (4) als Reaktion auf eine sich ändernde Versorgungsdurchflussrate gesteuert wird.

8. Verfahren nach einem der vorhergehenden Ansprüche, wobei jede der mehreren Steuereinrichtungen (4) als Reaktion auf eine sich ändernde Versorgungstemperatur gesteuert wird.

9. Verfahren nach einem der vorhergehenden Ansprüche, wobei jede der mehreren Steuereinrichtungen (4) gemeinsam durch die Steuerung (5) gesteuert werden.

10. Verfahren nach einem der vorhergehenden Ansprüche, wobei das Verfahren das Kompensieren von Benutzern für Wärmeverluste und/oder Druckänderungen entlang des thermischen Durchflusssystems (1) umfasst.

11. Verfahren nach einem der vorhergehenden Ansprüche, wobei das Verfahren eine Diagnostizierung umfasst, indem abgeschätzt wird, ob die Verbraucher (3) gegen die Erwartungen eine geringere Durchflussmenge oder weniger Energie erhalten, wobei dann eine Alarmierung erfolgt, dass im Durchflusssystem ein Fehler, entweder ein Pumpen- oder Durchflussleitungsproblem, aufgetreten ist.

12. Steuerung (5), die konfiguriert ist, um die Verfahrensschritte nach einem der vorhergehenden Ansprüche durchzuführen.

## Revendications

1. Procédé d'équilibrage d'un système de flux thermique (1) avec un réseau d'écoulement fournissant un fluide de transfert de chaleur à une pluralité de consommateurs (3) à un débit d'alimentation et à une température d'alimentation, un équipement de commande (4) connecté pour chaque consommateur (3) étant configuré pour réguler le débit du fluide de transfert de chaleur fourni audit consommateur (3), le procédé consistant à réguler ledit équipement de commande (4) de sorte que le consommateur associé (3) reçoive un prélèvement de débit maximum d'un fluide chauffant correspondant à une fraction réglée du débit d'alimentation total,
le procédé étant **caractérisé en ce que** :
le procédé comprend en outre un mode énergétique de régulation d'une commande (5) consistant à régler chaque équipement de commande (4) de sorte que chaque consommateur reçoive une énergie individuelle maximale en provenance du fluide de transfert de chaleur selon une fraction préréglée d'énergie individuelle de l'alimentation d'énergie totale,
le procédé comprend un mode volumique de régulation de l'équipement de commande (4) quand l'énergie d'alimentation est insuffisante par rapport à une demande d'énergie totale, le mode volumique de régulation consistant à régler chaque équipement de commande de sorte que chaque consommateur (3) reçoive un débit individuel maximum de fluide de transfert de chaleur selon une fraction préréglée de débit volumique individuel du volume total de fluide d'alimentation, le prélèvement de débit maximum étant limité, en cas de situation de sous-alimentation ou si la capacité hydraulique du réseau est épuisée, par la régulation en mode volumique, et le prélèvement de débit maximum étant limité, en cas de situation de suralimentation, par la régulation en mode énergétique.

2. Procédé selon la revendication 1, dans lequel chaque consommateur individuel desdits consommateurs (3) est réglé pour recevoir un débit individuel selon des facteurs incluant l'énergie nécessaire pour obtenir une température de consigne.

3. Procédé selon la revendication 2, dans lequel la température de consigne est la même pour tous les consommateurs de ladite pluralité de consommateurs (3).

4. Procédé selon la revendication 2 ou 3, dans lequel chacun desdits consommateurs (3) comprend une pluralité de dispositifs échangeurs de chaleur (9) configurés pour chauffer une pluralité d'espaces, ladite fraction du débit d'alimentation étant réglée pour correspondre à une alimentation d'énergie demandée pour obtenir ladite température de consigne dans lesdits espaces.

5. Procédé selon l'une quelconque des revendications 1 à 4, le procédé consistant à abaisser le débit vers un consommateur individuel (3) quand ledit consommateur (3) demande moins d'énergie que celle qui est fournie au consommateur (3).

6. Procédé selon l'une quelconque des revendications 2 à 5, le procédé comprenant l'étape consistant à enregistrer quand le débit d'alimentation total n'est pas suffisant pour obtenir la température de consigne pour tous les consommateurs de la pluralité de consommateurs, puis à abaisser chacune des fractions réglées d'un pourcentage calculé pour chacun desdits consommateurs (3) afin d'obtenir une nouvelle température de consigne abaissée.

7. Procédé selon l'une quelconque des revendications précédentes, dans lequel chaque équipement de commande de ladite pluralité d'équipements de commande (4) est régulé en réponse à un débit d'alimentation variable.

8. Procédé selon l'une quelconque des revendications précédentes, dans lequel chaque équipement de commande de ladite pluralité d'équipements de commande (4) est régulé en réponse à une température d'alimentation variable.

9. Procédé selon l'une quelconque des revendications précédentes, dans lequel chaque équipement de commande de ladite pluralité d'équipements de commande (4) est commandé en commun par ledit contrôleur (5).

10. Procédé selon l'une quelconque des revendications précédentes, le procédé consistant à compenser les utilisateurs en ce qui concerne des pertes de chaleur et/ou des variations de pression le long du système de flux thermique (1).

11. Procédé selon l'une quelconque des revendications précédentes, le procédé comprenant des diagnostics consistant à estimer si les consommateurs (3) obtiennent moins de débit ou d'énergie que prévu, puis à émettre une alarme indiquant qu'une anomalie existe sur le système de flux, soit un problème de pompage, soit un problème de conduite d'écoulement.

12. Contrôleur (5) configuré pour réaliser les étapes de procédé selon l'une quelconque des revendications précédentes.
